# FASCICULE DE BREVET EUROPEEN

(11) **EP 2 783 500 B1**
(45) Date de publication et mention de la délivrance du brevet: **03.02.2016**
(21) Numéro de dépôt: 12808421.7
(22) Date de dépôt: 20.11.2012
(51) Int. Cl.: H04L 12/725, H04L 12/743, H04L 29/12, H04L 12/741

(54) **PROCÉDÉ DE TRAITEMENT D'UNE REQUÊTE DANS UN RÉSEAU DE COMMUNICATION CENTRÉ SUR LES INFORMATIONS**
VERFAHREN ZUR BEARBEITUNG EINER ANFORDERUNG IN EINEM INFORMATIONSZENTRIERTEN KOMMUNIKATIONSNETZ
METHOD OF PROCESSING A REQUEST IN AN INFORMATION-CENTRED COMMUNICATION NETWORK

(30) Priorité: 22.11.2011 FR 1160632
(43) Date de publication de la demande: 01.10.2014
(73) Titulaire: Orange, 75015 Paris (FR)
(72) Inventeur: YOU, Wei, F-22300 Lannion (FR); TRUONG, Patrick, F-22300 Lannion (FR); MATHIEU, Bertrand, F-22560 Pleumeur-Bodou (FR); Peltier, Jean francois, F-22300 Ploumilliau (FR)
(86) Numéro de dépôt international: PCT/FR2012/052677
(87) Numéro de publication internationale: WO 2013/076418

(56) Documents cités:
- EP-A1- 2 214 357
- US-A1- 2005 195 832
- US-A1- 2010 040 067
- VAN JACOBSON ET AL: "Networking Named Content", CONEXT '09 PROCEEDINGS OF THE 5TH INTERNATIONAL CONFERENCE ON EMERGING NETWORKING EXPERIMENTS AND TECHNOLOGIES; DECEMBER 1 - 4, 2009; ROME, ITALY, ASSOCIATION FOR COMPUTING MACHINERY, NEW YORK, NY, USA, 1 décembre 2009 (2009-12-01), pages 1-12, XP002608160, DOI: 10.1145/1658939.1658941 ISBN: 978-1-60558-636-6 [extrait le 2010-11-02] cité dans la demande

## Description

L'invention concerne un procédé de traitement d'une requête relative à un contenu dans un réseau de communication centré sur les informations, mettant en oeuvre un acheminement par nom.

L'article de Van Jacobson et al., intitulé « Networking Named Content », et publié en 2009 dans les actes de la conférence CoNEXT'09 présente une nouvelle architecture centrée sur les contenus, appelée « Content-Centric Networking » en anglais (ou « CCN »). Cette architecture propose de changer le modèle de communication actuel basé sur un adressage physique dans un réseau par un nouveau modèle de communication basé sur un adressage par nom de contenu. Dans un tel réseau, l'idée est donc de proposer, de trouver et de délivrer un contenu plutôt que d'atteindre des équipements et de maintenir des connexions entre ces équipements.

Pour obtenir un contenu dans un tel réseau, une entité cliente transmet dans le réseau une requête relative à ce contenu et comprenant le nom du contenu. Une telle requête est appelée paquet d'intérêt, ou « Interest Packet ». Sur réception de cette requête sur une interface réseau donnée, un noeud d'acheminement du réseau, ou noeud CCN, vérifie s'il dispose du contenu recherché. A cette fin, il consulte une table de contenus qu'il détient et qui mémorise des contenus. S'il dispose du contenu recherché, il le transmet vers l'interface réseau par l'intermédiaire de laquelle la requête a été reçue, à destination de l'entité cliente, éventuellement par l'intermédiaire d'autres noeuds d'acheminement du réseau. S'il ne dispose pas du contenu recherché, il vérifie dans une table des demandes pendantes, ou « PIT » (de l'anglais « Pending Interest Table ») s'il a déjà reçu une précédente requête relative au même contenu via la même interface ou une autre interface et transmis la requête précédente à d'autres noeuds d'acheminement du réseau. Si ce n'est pas le cas, c'est-à-dire s'il ne trouve pas trace d'une précédente requête relative au même contenu dans sa table des demandes pendantes, il mémorise dans sa table des demandes pendantes le nom du contenu recherché en association avec un identifiant de l'interface par l'intermédiaire de laquelle la requête a été reçue. Il achemine ensuite la requête dans le réseau de communication au moyen d'une table d'acheminement qu'il possède (le terme habituellement utilisé est le terme anglais « Forwarding Information Base », ou « FIB ») et qui indique, en fonction du nom du contenu requis, vers quel(s) autre(s) noeud(s) du réseau transférer la requête. Si par contre sa table des demandes pendantes PIT comprend déjà le nom du contenu recherché en association avec l'identifiant d'une autre interface, il ne transmet pas la requête reçue, mais associe dans sa table des demandes pendantes PIT au nom du contenu recherché un identifiant de l'interface par l'intermédiaire de laquelle la requête a été reçue. En effet, si la table des demandes pendantes comprend déjà le nom du contenu recherché, cela signifie qu'une requête relative à ce contenu a été précédemment reçue et transférée dans le réseau, et que le noeud est en attente d'une réponse à cette requête.

La table des demandes pendantes PIT mémorise ainsi les noms des contenus demandés en association avec les identifiants de toutes les interfaces à travers lesquelles le contenu a été requis et doit donc être envoyé en réponse.

Lorsqu'un contenu est reçu sur une interface donnée par le noeud d'acheminement, suite à la transmission par ce noeud d'une requête relative à ce contenu, le noeud consulte alors sa table des demandes pendantes et transmet le contenu sur toutes les interfaces qui sont associées au nom du contenu. La table des demandes pendantes permet donc de retrouver le chemin que doit emprunter un contenu pour atteindre la ou les entités clientes qui l'a requis.

Dans cette architecture connue de noeuds CCN, les contenus sont organisés hiérarchiquement sous forme d'arbre. Le nom d'un contenu tient compte de cette organisation. Par exemple, /orange/map/lannion/site/batWA.jpg et /orange/map/lannion/site/batWB.jpg sont deux noms de contenu qui partagent une arborescence commune, en l'espèce /orange/map/lannion/site/. On constate que le nom d'un contenu est de taille variable, fonction de la taille de l'arborescence dans laquelle est situé le contenu. Un noeud d'acheminement CCN, pour traiter un paquet d'intérêt, doit donc stocker et manipuler des noms de contenu représentés sur un nombre quelconque de bits, ainsi que le ou les identifiant(s) d'interface sur lesquelles les paquets d'intérêt ont été reçus. La table des demandes pendantes PIT d'un noeud CCN qui mémorise tous les paquets d'intérêts reçus, ainsi que l'information relative au chemin que le contenu doit emprunter peut alors constituer une faiblesse pour un réseau CCN du fait de la taille que cette table peut atteindre. En effet, les réseaux CCN étant destinés à acheminer tous les contenus mis à disposition sur le réseau Internet, on comprend qu'une telle table peut mémoriser des méga-, voire des giga-octets d'informations. On sait par ailleurs que plus la taille de la table des demandes pendantes est importante et plus les temps d'accès aux données qu'elle contient sont importants. Cela peut nuire considérablement aux performances d'un réseau CCN.

Un des buts de l'invention est de remédier à des insuffisances/inconvénients de l'état de la technique et/ou d'y apporter des améliorations.

Selon un premier aspect, l'invention a pour objet un procédé de traitement d'une requête de contenu par un dispositif d'acheminement dans un réseau de communication mettant en oeuvre un acheminement par nom, le dispositif comprenant une pluralité d'interfaces aptes à recevoir au moins un requête de contenu et au moins un paquet de données associé à un contenu, et une table d'acheminement adaptée pour déterminer en fonction d'un nom de contenu requis, au moins une interface vers laquelle acheminer la requête de contenu, ledit procédé comprenant :
- une étape de réception de la requête de contenu à travers une première interface du dispositif,
- si le dispositif n'est pas apte à fournir ledit paquet de données associé au contenu, une étape de recherche du nom du contenu dans une table des demandes pendantes associée à la première interface, par l'intermédiaire de laquelle la requête a été reçue,
- dans le cas où le nom de contenu ne figure pas dans la table des demandes pendantes associée à la première interface, une étape de mémorisation du nom du contenu requis dans ladite table, et
- une étape de transmission de la requête à travers au moins une deuxième interface, ladite deuxième interface étant déterminée en fonction du nom du contenu requis à partir de la table d'acheminement dudit dispositif.

Selon l'invention, à chaque interface du dispositif d'acheminement est associée une table des demandes pendantes, propre aux requêtes de contenu reçues sur cette interface. On comprend aisément que par rapport à la mise en oeuvre connue d'un dispositif d'acheminement CCN qui comprend une table globale des demandes pendantes, chacune des tables des demandes pendantes associées à chacune des interfaces du dispositif est de taille beaucoup plus petite que la table globale. En effet, la table dédiée à une interface ne mémorise que les requêtes de contenu reçues sur l'interface. Par ailleurs, la table étant dédiée à l'interface il n'est pas nécessaire de mémoriser le ou les identifiant(s) d'interface sur laquelle/lesquelles les requêtes de contenus ont été reçues. Les tables des demandes pendantes étant plus petites, on comprend qu'un accès à ces tables est plus rapide, ce qui optimise le temps d'un traitement des demandes pendantes par le dispositif. Ce gain au niveau de chaque dispositif d'acheminement du d'un réseau contribue à améliorer les performances du réseau.

Par ailleurs disposer d'une table des demandes pendantes par interface permet d'utiliser pour cette table des ressources propres à chacune des interfaces. De telles ressources peuvent être de la mémoire allouée à chacune des interfaces ou/et des composants particuliers, tels que des composants « ASIC » (de l'anglais « Application-Specific Integrated Circuit»). Cela optimise l'utilisation des ressources du dispositif, et économise des ressources globales du dispositif, ce qui contribue à l'amélioration des performances globales du dispositif.

Par ailleurs, même si une requête concernant un même contenu est reçue sur deux interfaces différentes et qu'elle est donc acheminée deux fois dans le réseau, le ou les noeud(s) vers lequel/lesquels la requête est acheminée agrège ces deux requêtes. Ainsi, le ou les noeud(s) concerné(s) ne mémorise(nt) qu'une occurrence du nom du contenu requis dans sa table des demandes pendantes.

Avantageusement, le procédé selon l'invention comprend :
- une étape de réception du paquet de données associé au contenu par la deuxième interface, le paquet de données comprenant le nom du contenu,
- une étape d'interrogation des tables des demandes pendantes associées respectivement aux interfaces, à partir du nom du contenu, afin de déterminer au moins une interface concernée, dont la table des demandes pendantes associée comprend le nom du contenu,
- une étape d'envoi du paquet de données à travers l'interface concernée.

Lors de la réception d'un paquet de données sur une des interfaces, en réponse à une requête de contenu acheminée par le dispositif dans le réseau, une recherche des interfaces vers lesquelles le paquet de données doit être envoyé est optimisée du fait de que chaque table des demandes pendantes PITi est propre à une interface intᵢ. En effet, il est possible de paralléliser les recherches dans les différentes tables. Ces tables étant plus petites qu'une table globale, commune à toutes les interfaces, le temps nécessaire à la recherche des interfaces concernées est donc plus rapide.

Selon un exemple de réalisation, le procédé selon l'invention comprend :
- une étape de réception d'une commande de remise à zéro des tables des demandes pendantes associées respectivement aux interfaces, en provenance d'une entité de supervision de la qualité de service,
- une étape de remise à zéro des tables des demandes pendantes du dispositif.

Une fois encore, une remise à zéro des tables, commandée par une entité de gestion de la qualité de service est plus rapide dans le cas d'une remise à zéro de plusieurs tables, chacune étant propre à une interface que dans le cas d'une table globale. En effet, les commandes de remises à zéro peuvent être paralléliser.

Selon un exemple de réalisation de l'invention, le procédé comprend, après réception de la requête de contenu, une étape de formatage du nom du contenu.

L'étape de formatage selon l'invention permet de pallier des différences de représentation entre dispositifs ou entités du réseau. Ainsi, par le biais du formatage, un nom de contenu a une représentation commune pour tous les dispositifs du réseau. Cela évite de traiter de façon distincte deux noms de contenu légèrement différents qui font référence au même contenu.

Selon un exemple de réalisation, la table des demandes pendantes est mise en oeuvre au moyen d'un filtre de Bloom avec compteurs, le filtre étant une table de m compteurs, et l'étape de mémorisation du nom du contenu comprend :
- une application d'un nombre déterminé de fonctions de hachage h1, ..., hk, au nom du contenu, les fonctions appliquées produisant respectivement une valeur comprise entre 0 et m-1,
- un incrément de un des compteurs du filtre associés à des indices du filtre, lesdits indices étant égaux aux valeurs respectives produites par les fonctions de hachage.

Dans l'exemple de réalisation décrit ici, les tables des demandes pendantes PITi sont mises en oeuvre au moyen de filtres de Bloom avec compteurs. Il est connu qu'un filtre de Bloom, avec ou sans compteurs, est une structure de données probabiliste compacte dont la taille est fixe et indépendante du nombre d'éléments contenus. Une telle table peut donc être extrêmement compacte. On comprend qu'une telle structure est très intéressante pour mémoriser une très grande quantité de noms de contenus de taille variable. Plus précisément, ce sont des représentations des noms de contenu qui sont mémorisés dans les filtres de Bloom. Le filtre de Bloom avec compteur est adapté à l'enregistrement d'éléments, dans le cas présent de représentations de noms de contenus après application de fonctions de hachage à ces noms de contenus, et à la suppression d'éléments. Le filtre de Bloom est donc tout à fait adapté pour la mémorisation de représentations de noms de contenus. En effet, une fois qu'un nom de contenu, par l'intermédiaire de sa représentation, est mémorisé dans une table des demandes pendantes mise en oeuvre par un filtre de Bloom, le dispositif a besoin d'interroger le filtre pour savoir si le nom de contenu est présent dans le filtre, et de supprimer ce nom de contenu, lorsqu'une requête a été traitée. Ainsi, les filtres de Bloom avec compteurs optimisent la taille mémoire requise par une tables des demandes pendantes et contribue à optimiser les performances lors de traitement dans le réseau.

Selon un exemple de réalisation, le dispositif d'acheminement comprend en outre un filtre de Bloom global, le procédé comprenant :
- sur réception de la requête de contenu, une étape de vérification que le nom du contenu est présent dans le filtre de Bloom avec compteurs qui met en oeuvre la table des demandes pendantes associée à la première interface,
- si le nom du contenu est présent dans le filtre de Bloom avec compteurs associé à la première interface, une étape de vérification que le nom du contenu figure dans le filtre de Bloom global,
- si le nom du contenu figure dans le filtre de Bloom global, une étape de blocage de ladite requête de contenu.

Il est connu que les filtres de Bloom sont sujets aux faux-positifs. En effet, bien que l'on sache avec certitude qu'un élément est absent du filtre de Bloom, on ne sait qu'avec une certaine probabilité qu'un élément peut être présent dans le filtre. Le filtre de Bloom global permet ainsi de réduire le nombre de faux-positifs. A cet effet, lorsqu'une requête de contenu arrive sur une interface donnée, le filtre de Bloom avec compteurs qui met en oeuvre la table des demandes pendantes associée à l'interface est interrogé sur la présence du nom du contenu requis. Si le filtre de Bloom avec compteurs indique que le nom du contenu est présent, alors l'interrogation du filtre de Bloom général permet de vérifier si l'on est en présence d'un faux-positif. En effet, si le filtre de Bloom général interrogé sur la présence du nom du contenu indique que le nom du contenu est absent, alors cela signifie qu'on est en présence d'un faux-positif puisque cela indique qu'aucune requête de contenu relative à ce nom de contenu n'a été acheminée par le dispositif vers un autre dispositif. Ainsi, on limite le nombre de faux-positifs.

Par ailleurs, si le filtre de Bloom général indique que le nom du contenu est présent alors on considère qu'une requête de contenu a déjà été acheminée dans le réseau et qu'il n'est pas nécessaire de l'acheminer de nouveau. La requête de contenu est donc bloquée dans le cas où le filtre de Bloom avec compteurs propre à l'interface sur laquelle la requête est arrivée, et le filtre de Bloom général indiquent tous les deux que le nom du contenu requis est présent. Dans ce cas, on considère que la requête est une requête dupliquée.

L'invention concerne aussi un dispositif d'acheminement dans un réseau de communication mettant en oeuvre un acheminement par nom, ledit dispositif comprenant :
- une pluralité d'interfaces, respectivement adaptées pour recevoir au moins une requête de contenu et au moins un paquet de données associé à un contenu,
- une table d'acheminement, adaptée pour déterminer en fonction d'un nom de contenu requis, au moins une interface vers laquelle acheminer la requête de contenu,
- une pluralité de tables des demandes pendantes, chaque table des demandes pendantes étant associée à une interface respective et agencée pour mémoriser le nom d'un contenu requis via l'interface à laquelle elle est associée,
- des moyens de transmission, agencés pour transmettre la requête de contenu reçue sur une première interface vers une deuxième interface, ladite deuxième interface étant identifiée en fonction du nom du contenu dans la table d'acheminement dudit dispositif.

L'invention porte également sur un réseau apte à mettre en oeuvre un acheminement par nom de contenu, comprenant :
- au moins une entité cliente, adaptée pour émettre des requêtes de contenus, et
- une pluralité de dispositifs d'acheminement selon l'invention.

L'invention concerne aussi un programme destiné à être installé dans un dispositif d'acheminement d'un réseau de communication mettant en oeuvre un acheminement par nom, comprenant des instructions pour la mise en oeuvre des étapes du procédé de traitement d'une requête de contenu selon l'invention, qui sont exécutées par le dispositif, lorsque le programme est exécuté par un processeur.

L'invention concerne également un support de données sur lequel est enregistré le programme d'ordinateur selon l'invention.

De nombreux détails et avantages de l'invention seront mieux compris à la lecture de la description de modes particuliers de réalisation en référence aux dessins annexés donnés à titre non limitatif, et dans lesquels :
- la figure 1 présente un dispositif d'acheminement d'un réseau de communication qui met en oeuvre un acheminement par nom, selon un premier exemple de réalisation de l'invention ;
- la figure 2 est une représentation schématique d'un réseau de communication qui met en oeuvre un acheminement par nom ;
- les figures 3a, 3b et 3c présentent les étapes d'un procédé de traitement d'une requête de contenu dans un réseau de communication mettant en oeuvre un acheminement par nom, selon un premier exemple de réalisation. Plus précisément :

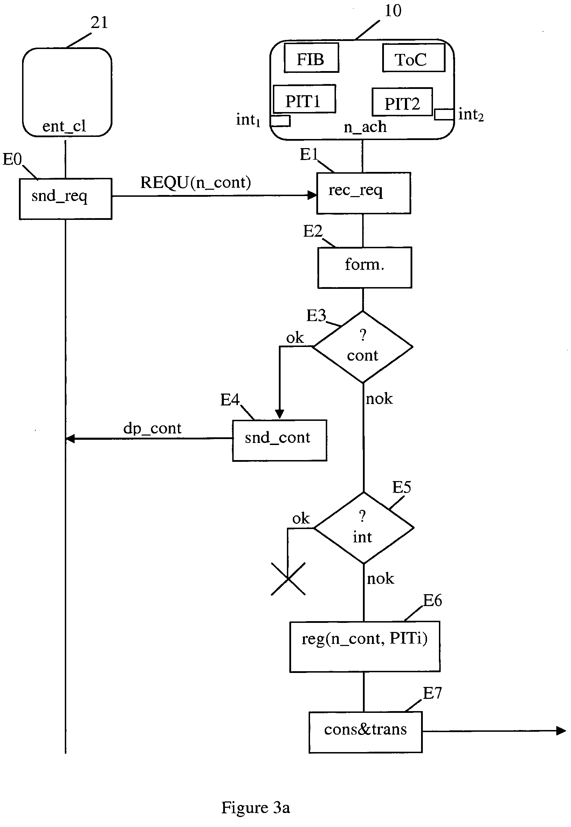

   - la figure 3a présente les étapes du procédé de traitement d'une requête qui concernent la réception de la requête de contenu,

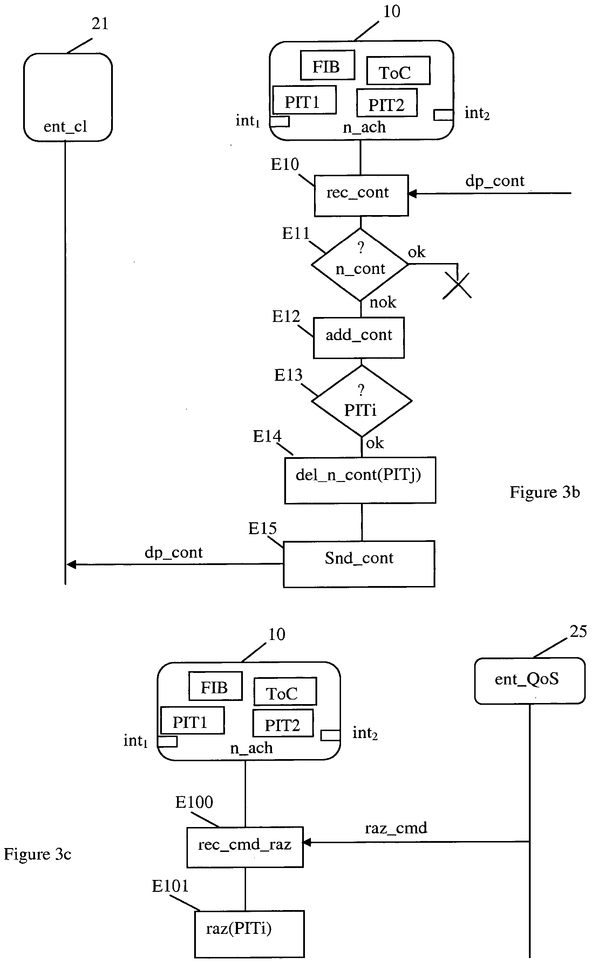

   - la figure 3b présente les étapes du procédé de traitement d'une requête qui concernent la réception d'un contenu, et
   - la figure 3c présente les étapes du procédé de traitement d'une requête qui concernent une remise à zéro des tables des demandes pendantes.

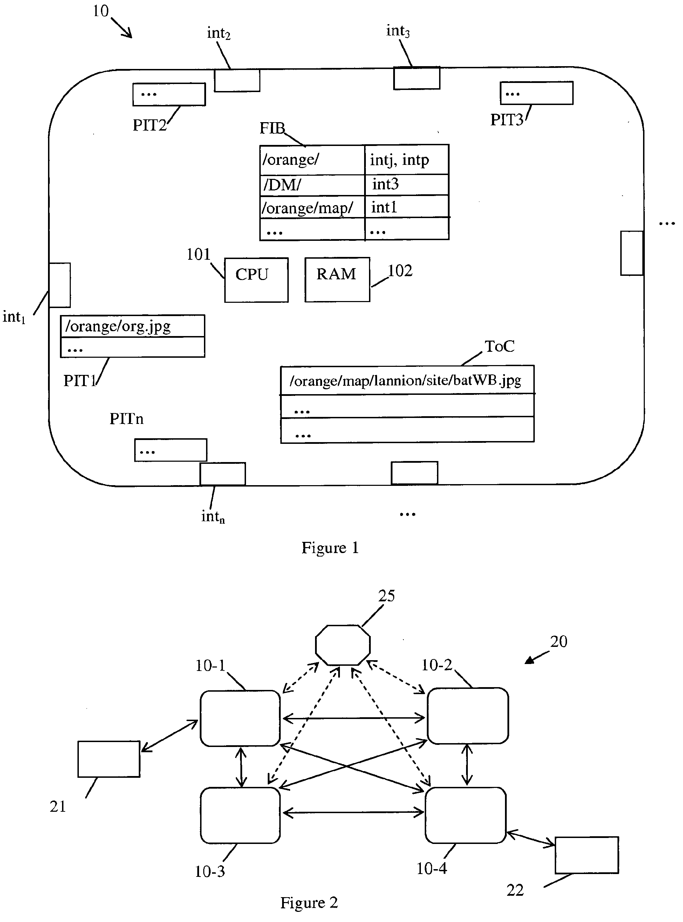

Un dispositif d'acheminement dans un réseau de communication qui met en oeuvre un acheminement par nom de contenu, selon un premier exemple de réalisation va maintenant être décrit en relation avec la figure 1.

D'emblée, on note qu'un contenu est matérialisé dans le réseau par un paquet de données. Le paquet de données comprend, dans un en-tête le nom du contenu, par exemple /orange/map/lannion/site/batWA.jpg, ainsi qu'une suite de bits qui correspond au contenu en tant que tel. Lorsqu'une information à acheminer dans le réseau, telle qu'un film, par exemple /videos/lannion.mpg, est matérialisée dans le réseau par plusieurs paquets, alors chacun des paquets est considéré comme un contenu à part entière, identifié par un nom qui lui est propre, par exemple /videos/lannion.mpg/part1 et /videos/lannion.mpg/part2.

Un dispositif d'acheminement 10, ou dispositif « CCN » (de l'anglais « Content-Centric Networking ») selon l'invention est adapté pour :
- recevoir une requête de contenu d'une ou de plusieurs entité(s) cliente(s), ou d'un deuxième dispositif d'acheminement (non représentés sur la figure 1) ou de plusieurs. La requête de contenu, ou paquet d'intérêt, comprend un nom de contenu requis, par exemple /orange/map/lannion/site/batWA.jpg.
- acheminer la requête de contenu reçue de l'entité cliente ou du deuxième noeud vers un ou plusieurs autres dispositifs d'acheminement du réseau (non représentés sur la figure 1), s'il ne dispose pas du contenu dans une table de contenus notée ToC qu'il possède. Dans ce cas, le dispositif 10 reçoit de l'autre dispositif le contenu requis en réponse sous forme d'un paquet de données, mémorise le contenu reçu dans sa table de contenus ToC et transmet le contenu à l'entité cliente ou au deuxième dispositif, en réponse à la requête initiale,
- fournir le contenu requis, s'il détient le contenu dans sa table de contenus ToC.

A cette fin, le noeud d'acheminement 10 comprend :
- un processeur 101, ou « CPU » (de l'anglais « Central Processing Unit »), ou unité de traitement. Le processeur est adapté pour mettre en oeuvre les étapes du procédé de traitement d'une requête de contenu, décrites en relation avec les figures 3a, 3b et 3c. Le processeur 101 est relié à un ensemble de mémoires, dont :
- une mémoire vive 102, ou « RAM » (pour « Random Access Memory »), qui permet d'effectuer des traitements, tels que des recherches dans des tables, de faire des comparaisons, de charger des instructions et de les exécuter,
- une pluralité d'interfaces int₁, int₂, int₃,..., intₙ, adaptées pour communiquer soit avec d'autres entités du réseau : les autres dispositifs d'acheminement, ou/et l'entité cliente ou le deuxième dispositif d'acheminement, soit avec des applications (non représentées) hébergées par le dispositif 10. En particulier, une interface est adaptée pour :
   - recevoir des requêtes de contenus de l'entité cliente ou du deuxième noeud d'acheminement,
   - transmettre à l'entité cliente ou au deuxième noeud réseau un contenu en réponse à la requête. Le contenu transmis est constitué par un paquet de données. Le paquet de données comprend le nom du contenu et une pluralité de bits qui correspondent au contenu en tant que tel,
   - transmettre une requête de contenu reçue vers d'autres dispositifs d'acheminement réseau à travers une ou plusieurs autres interfaces, lorsque la requête n'a pas déjà été reçue et lorsque le dispositif d'acheminement 10 ne possède pas le contenu requis.

Pour réaliser ces opérations, le dispositif 10 comprend par ailleurs :
- la table de contenus ToC, destinée à mémoriser des contenus. La table de contenus repose sur des mécanismes de mise en cache connus dont le fonctionnement n'est pas détaillé ici. Un contenu est mémorisé dans la table de contenus ToC lorsqu'il est reçu d'un autre dispositif réseau, en réponse à une requête de contenu transmise par le dispositif 10 à cet autre dispositif,
- une table d'acheminement, ou « FIB », de l'anglais « Forwarding Information Base », destinée à identifier une ou plusieurs interfaces vers laquelle/lesquelles transmettre une requête de contenu reçue par le dispositif 10, lorsque le dispositif 10 ne dispose pas du contenu requis dans sa table de contenus ToC. La table d'acheminement FIB est ainsi destinée à permettre un routage de la requête de contenu vers d'autres dispositifs du réseau aptes à trouver ce contenu. Ainsi, lorsque le dispositif 10 ne dispose pas du contenu requis dans sa table de contenus ToC et ne sait donc pas répondre à la requête de contenu qu'il a reçue, il identifie au moyen de la table d'acheminement FIB les interfaces vers lesquelles transmettre la requête, ces interfaces permettant de transmettre la requête à d'autres noeuds du réseau. Une donnée mémorisée dans la table d'acheminement FIB comprend tout ou partie d'un nom du contenu, par exemple /orange/map/, associée à une ou plusieurs interfaces du noeud 10, dans l'exemple de la figure 1, à l'interface int₁. La façon dont la table d'acheminement FIB est peuplée repose sur des protocoles connus et n'est pas détaillée ici,
- selon l'invention, une pluralité de tables des demandes pendantes (le terme habituellement utilisé est le terme anglais « PIT », pour « Pending Interest Table »), notées PIT1, PIT2, PIT3, ..., PITn. Plus précisément, une table des demandes pendantes PITi, 1≤ i ≤ n, est associée à chacune des interfaces intᵢ du dispositif 10. La table des demandes pendantes PITi est destinée à mémoriser, pour l'interface intᵢ à laquelle elle est associée, le nom des contenus compris dans les requêtes de contenu reçues via cette interface, et qui sont en attente d'une réponse. On remarque que si deux requêtes reçues via la même interface intᵢ comprennent le même nom de contenu, il n'est pas nécessaire de mémoriser deux fois le nom du contenu dans la table des demandes pendantes. En effet, un paquet de données associé au contenu et qui est envoyé en réponse sur l'interface intᵢ constitue une réponse unique aux deux requêtes.

Dans un exemple de réalisation de l'invention, la mise en oeuvre du dispositif d'acheminement 10 utilise des filtres de Bloom avec compteurs.

Un filtre de Bloom est une structure de données probabiliste compacte, adaptée pour mémoriser de manière optimale une très grande quantité de données, et pour être interrogée sur la présence ou l'absence d'un élément donné dans le filtre. Plus précisément, un filtre de Bloom est une table FB (non représentée sur la figure 1) de m-bits, initialisés à zéro. Les différents bits de la table FB sont notés FB[0], ...FB[m-1]. Enregistrer un élément x dans le filtre de Bloom consiste à enregistrer une empreinte de l'élément x dans la table FB. A cette fin, un ensemble déterminé de fonctions de hachage choisies, notées par exemple h₁, ..., hₖ sont appliquées à l'élément x. L'application des k fonctions de hachage h₁, ..., hₖ à l'élément x permet d'obtenir k positions h₁(x), ..., hₖ(x) dans la table FB. Enregistrer l'empreinte de la valeur x dans la table FB consiste alors à positionner à 1 les valeurs FB[h₁(x)], ..., FB[hₖ(x)]. Il est admis que l'utilisation de sept fonctions de hachage, donc k = 7, permet de mémoriser de manière optimale deux à trois millions d'entrées dans un filtre de Bloom.

Les filtres de Bloom sont des structures bien adaptées à la mémorisation d'un très grand nombre de données. Cependant un défaut connu des filtres de Bloom est qu'ils ne permettent pas de gérer correctement la suppression d'éléments dans le filtre. Une variante des filtres de Bloom, appelée filtre de Bloom avec compteurs pallie ce défaut. Un filtre de Bloom avec compteurs est une table FBc de m-compteurs, initialisés à zéro. L'ajout d'un élément x dans le filtre de Bloom avec compteurs consiste alors à incrémenter de 1 les compteurs associés aux différentes positions de la table FBc calculées en appliquant les fonctions de hachage h₁, ..., hₖ à l'élément x. Par analogie, la suppression de l'élément x dans le filtre de Bloom FBc consiste à décrémenter de 1 les mêmes compteurs.

Dans l'exemple de réalisation du dispositif 10 décrit ici, la table des demandes pendantes PITi associée à l'interface intᵢ du noeud 10 est mise en oeuvre au moyen d'un filtre de Bloom avec compteurs noté FBcᵢ (non représenté sur le figure 1). Utiliser un filtre de Bloom avec compteurs pour représenter une table des demandes pendantes permet d'optimiser la place mémoire nécessaire à la table des demandes pendantes et contribue donc à l'amélioration des performances.

Dans un autre exemple de réalisation, le dispositif d'acheminement 10 comprend également une table globale FBS (non représentée sur la figure 1), mise en oeuvre au moyen d'un filtre de Bloom. Ce filtre de Bloom est destiné à limiter le nombre de faux-positifs, inhérents à l'utilisation de filtres de Bloom, avec ou sans compteurs.

Un réseau de communication mettant en oeuvre un acheminement par nom de contenu va maintenant être présenté en relation avec la figure 2.

Un réseau 20 qui met en oeuvre un acheminement par nom comprend une pluralité d'équipements réseau :
- une pluralité de dispositifs d'acheminement 10-1, 10-2, 10-3, 10-4, conformes à la description du dispositif 10, présentée en relation avec la figure 1 ;
- une pluralité d'entités clientes 21-1, 20-2, aptes à émettre des requêtes de contenu et à recevoir des paquets de données en réponse,
- au moins une entité 22 de gestion de la qualité de service. L'entité 22 de gestion de la qualité de service supervise la qualité de service du réseau 20 ; elle dispose de certains éléments de mesure adaptés pour mesurer les performances du réseau et détecter une détérioration de la qualité de service en dessous d'un niveau acceptable.

Seuls quelques dispositifs d'acheminement et quelques entités clientes sont représentés sur la figure 2, le réseau 20 n'est bien sûr pas limité en nombre de dispositifs d'acheminement et d'entités clientes qui le composent.

Les étapes d'un procédé de traitement d'une requête de contenu dans un réseau de communication mettant en oeuvre un acheminement par nom, selon un premier exemple de réalisation vont maintenant être décrites, en relation avec les figures 3a, 3b et 3c.

Plus précisément, la figure 3a décrit les étapes du procédé de traitement d'une requête qui concernent la réception de la requête de contenu.

Le réseau 20 (non représenté sur la figure 3a), comprend une pluralité d'équipements réseau, par exemple une entité cliente 21 apte à émettre des requêtes relatives à des contenus, et à recevoir des contenus en réponse et un dispositif d'acheminement 10. Le dispositif 10 est apte à répondre à une requête s'il dispose du contenu requis et/ou à acheminer la requête vers un ou plusieurs autres dispositifs d'acheminement (non représentés sur la figure 3a), s'il ne dispose pas du contenu. Le dispositif 10 possède une pluralité d'interfaces intᵢ, 1 ≤ i ≤ n. A chacune des interfaces intᵢ est associée une table des demandes pendantes PITi. Le dispositif 10 comprend également une table d'acheminement FIB et une table de contenus ToC. Par souci de simplification, seules deux interfaces int₁ et int₂, et par conséquent deux tables des demandes pendantes associées PIT1, PIT2 sont représentées sur la figure. Aucune limitation n'est cependant attachée au nombre d'interfaces.

Dans une étape initiale E0 d'envoi d'une requête, l'entité client 21 émet une requête de contenu REQU dans le réseau 20. La requête REQU comprend le nom du contenu n_cont.

Dans une étape E1 de réception, le dispositif d'acheminement 10 reçoit la requête de contenu REQU sur une première interface, par exemple int₁.

Dans une étape E2 de formatage, le dispositif 10 formate le nom du contenu n_cont. Le formatage du nom de contenu n_cont est destiné à obtenir une représentation conforme à un schéma de représentation du dispositif 10. L'étape de formatage permet de pallier des différences de représentation du nom du contenu entre l'entité cliente 21 et le dispositif 10. Dans un exemple de réalisation, l'étape de formatage E2 consiste à supprimer les accents du nom du contenu n_cont.

Dans une étape E3 de recherche de contenu, le dispositif 10 vérifie si le contenu requis figure dans sa table de contenus ToC. A cette fin, le dispositif 10 vérifie si le nom du contenu n_cont est présent dans sa table de contenus ToC.

Dans une étape E4 d'envoi du contenu, correspondant à un cas où le contenu demandé figure dans la table de contenus ToC du dispositif 10 (branche « ok » sur le figure 3a), le dispositif 10 transmet le contenu, sous forme d'un paquet de données dp_cont, à travers la première interface int₁, en réponse à la requête REQU. Cela termine le traitement de la requête REQU.

Si le contenu requis ne figure pas dans la table de contenus ToC du dispositif 10 (branche « nok » sur la figure), alors dans une étape E5 de recherche d'intérêt, le dispositif 10 vérifie si le nom du contenu n_cont requis figure déjà dans la table des demandes pendantes PIT1, associée à la première interface int₁. L'étape E5 de recherche, destinée à vérifier s'il existe déjà une demande relative à ce contenu en cours de traitement par le dispositif 10, permet d'éviter d'enregistrer deux fois la même information, en l'espèce le nom du contenu n_cont, dans la table des demandes pendantes PIT1.

Dans un premier cas (branche « ok » sur la figure 3a), correspondant à un cas où le nom du contenu figure déjà dans la table PIT1 des demandes pendantes associée à la première interface int₁, le dispositif 10 ne fait rien, c'est-à-dire que le traitement de la requête REQU se termine. En effet, dans ce cas, le dispositif 10 a déjà traité une requête relative au même contenu et il est en attente du contenu requis.

Dans un deuxième cas (branche « nok » sur la figure 3a), correspondant au cas où le nom du contenu ne figure pas dans la table des demandes pendantes PIT1 associée à la première interface int₁, le dispositif 10 enregistre au cours d'une étape E6 d'enregistrement le nom du contenu n_cont dans la table des demandes pendantes PIT1 associée à la première interface int₁.

Dans une étape suivante E7 de consultation et de transmission, consécutive à l'enregistrement du nom du contenu n_cont dans la table des demandes pendantes PIT1, le dispositif 10 consulte sa table d'acheminement FIB et transmet la requête sur une deuxième interface, par exemple int₂, associée dans la table d'acheminement FIB à une partie du nom du contenu, vers un autre noeud d'acheminement du réseau (non représenté sur la figure 3a).

Les étapes du procédé de traitement d'une requête, qui concernent la réception d'un contenu en réponse à l'acheminement par le dispositif 10 vers un autre dispositif d'acheminement de la requête de contenu vont maintenant être décrites, en relation avec la figure 3b.

Dans une étape E10 de réception d'un contenu, le dispositif 10 reçoit à travers la deuxième interface int₂ un contenu sous forme d'un paquet de données dp_cont d'un autre dispositif d'acheminement (non représenté sur la figure 3b). La réception du contenu fait suite à l'envoi préalable par le dispositif 10 d'une requête de ce contenu sur la deuxième interface int₂, conformément à l'étape E7 du procédé décrit en relation avec la figure 3a. Le paquet de données dp_cont comprend le nom du contenu n_cont.

Dans une étape E11 de recherche de contenus, il est vérifié si le contenu reçu est déjà mémorisé dans la table des contenus ToC. A cette fin, le nom du contenu n_cont qui figure en en-tête du paquet de données dp_cont reçu est recherché dans la table des contenus ToC. Si le nom du contenu n_cont figure déjà dans la table des contenus ToC (branche « ok » sur la figure), alors le traitement du contenu reçu s'arrête. En effet, dans ce cas, le contenu est considéré comme dupliqué.

Dans un autre cas où le nom du contenu n_cont ne figure pas déjà dans la table des contenus ToC (branche « nok » sur la figure), alors dans une étape E12 d'ajout, le contenu n_cont est mémorisé dans la table des contenus ToC.

Dans une étape suivante E13 d'interrogation des tables des demandes pendantes, le dispositif 10 interroge toutes les tables des demandes pendantes, PITi, associées respectivement aux interfaces intᵢ du dispositif 10, afin d'identifier si le nom du contenu n_cont y figure. Cette étape est destinée à identifier la ou les interfaces par l'intermédiaire de laquelle/desquelles une requête relative à ce contenu a été reçue, et donc la ou les interfaces vers lesquelles le contenu doit être envoyé en réponse. Les tables des demandes pendantes PITi selon l'invention étant de taille plus petite que les tables de tables des demandes pendantes selon l'état antérieur de la technique, on comprend qu'une recherche dans les tables des demandes pendantes PITi consomme moins de ressources et contribue donc à l'amélioration des performances du réseau. Dans un exemple de réalisation de l'invention, les tables des demandes pendantes sont interrogées en parallèle. Ainsi, le temps de recherche est optimisé.

Dans une étape E14 de suppression, correspondant à un cas où le nom du contenu n_cont figure dans au moins une table des demandes pendantes PITi, 1 ≤ i ≤ n, le dispositif 10 supprime le nom du contenu n_cont de toutes les tables des demandes pendantes PITi où il apparaît. On suppose que le nom du contenu n_cont apparaît au moins dans la table des demandes pendantes PIT1 associée à la première interface int₁.

Dans une étape suivante d'envoi E15 le dispositif 10 active un paquet de données sur toutes les interfaces intⱼ associées aux tables des demandes pendantes PITj dans lesquelles le nom de contenu n_cont a été trouvé de manière à transmettre sur ces interfaces le paquet de données dp_cont associé au contenu. Par exemple, le paquet de données dp_cont est activé sur la première interface int₁ associée à la table des demandes pendantes PIT1 dans laquelle est mémorisé le nom du contenu n_cont. Ainsi, le dispositif 10 répond à la ou les requête(s) qu'il a reçue(s) concernant le contenu n_cont.

Les étapes du procédé de traitement d'une requête, qui concernent une remise à zéro des tables des demandes pendantes vont maintenant être décrites en relation avec la figure 3c.

Dans une étape E100 de réception d'un ordre de remise à zéro, le dispositif 10 reçoit un ordre de remise à zéro de l'entité 22 de gestion de la qualité de service (non représentée sur la figure 3c). Un tel message est envoyé lorsque l'entité de gestion 22 détecte une détérioration de la qualité de service dans le réseau 20. Une telle dégradation de la qualité de service peut se traduire au niveau du dispositif 10 par un trop grand nombre de requêtes sans réponse.

Dans une étape E101 de remise à zéro, le dispositif 10 commande l'effacement de toutes les tables des demandes pendantes PITi du dispositif 10. Ainsi, tous les noms de contenus mémorisés dans toutes les tables des demandes pendantes PITi sont supprimés. Dans un premier exemple de réalisation, toutes les tables PITi des demandes pendantes sont effacées simultanément. Cela n'est pas pénalisant pour le réseau 20. En effet, il est habituel que dans un réseau, une requête pour laquelle aucune réponse n'est reçue au terme d'une durée donnée soit réémise par l'entité cliente qui l'a émise initialement. Dans un autre exemple de réalisation, les tables des demandes pendantes sont effacées une à une, l'effacement de deux tables étant espacé d'une période de temps déterminée. Dans ce dernier cas, l'effacement de quelques tables des demandes pendantes peut être suffisant pour rétablir une qualité de service correcte. Ainsi, les requêtes mémorisées dans les tables des demandes pendantes épargnées par la remise à zéro peuvent être traitées, sans réémission des requêtes.

Dans un exemple de réalisation de l'invention, des filtres de Bloom sont utilisés. Plus précisément, chaque table des demandes pendantes PITi, 1 ≤ i ≤ n, du dispositif d'acheminement 10 est mise en oeuvre au moyen d'un filtre de Bloom avec compteurs FBi. Par ailleurs, le dispositif 10 comprend également un filtre de Bloom général FBS, destiné à réduire le nombre de faux-positifs, inhérents à l'utilisation des filtres de Bloom.

Dans cet exemple, sur réception de la requête de contenu REQU(n_cont) sur la première interface int₁, conformément à l'étape E1 de réception décrite en relation avec la figure 3a, le dispositif 10 formate le nom du contenu n_cont conformément à l'étape E2 de formatage, puis vérifie s'il dispose du contenu dans sa table de contenus ToC, conformément à l'étape E3. S'il trouve le contenu dans sa table de contenus ToC, conformément à l'étape E4, le dispositif 10 active un paquet de données dp_cont et le transmet à travers la première interface int₁. Dans le cas où il ne dispose pas du contenu, le dispositif 10 interroge le filtre de Bloom avec compteurs FB1 associé à la première interface int₁, conformément à l'étape E5 de recherche d'intérêt. Plus précisément, le dispositif 10 calcule l'empreinte du nom du contenu n_cont au moyen des fonctions de hachage h₁, ..., hₖ prédéfinies. Il calcule donc h₁(n_cont), ..., hₖ(n_cont). Si une ou plusieurs des valeurs obtenues val1, ..., valk sont telles que FBi(valj) = 0, 1 ≤ j ≤ k, alors le contenu requis n'est pas présent dans la table des demandes pendantes PIT1 associée à la première interface int₁. Cela signifie que le contenu est requis pour la première fois à travers la première interface int₁. Conformément à l'étape E6 d'enregistrement, le dispositif 10 enregistre alors le nom du contenu n_cont dans la table PIT1 associée à la première interface int₁. A cette fin, le dispositif 10 incrémente de un les compteurs associés aux valj-ièmes éléments du filtre FB1. Ainsi, pour toutes les valeurs de j, FB1[valj] = FB1[valj] + 1. L'étape E7 de consultation et de transmission est ensuite exécutée de manière à acheminer la requête dans le réseau.

Si par contre toutes les valeurs val1, ..., valk sont telles que les compteurs associés aux valj-ièmes éléments du filtre FB1 sont supérieurs ou égaux à 1, c'est-à-dire si FB1[valj] ≥ 1, pour 1 ≤ j ≤k, alors il est nécessaire de vérifier que la requête de contenu ne correspond pas à un faux-positif, c'est-à-dire que la requête de contenu n'est pas considérée à tort comme ayant déjà été reçue. A cette fin, le filtre de Bloom général FBS est interrogé, de manière à vérifier si le nom du contenu n_cont figure déjà dans le filtre de Bloom général FBS. Cela signifierait que la requête relative à ce contenu a déjà été reçue, et traitée par le dispositif 10. Ainsi, il est vérifié les valj-ièmes valeurs du filtre général FBS. S'il existe au moins une valeur égale à zéro, c'est-à-dire s'il existe un indice 1 tel que FBS[1] = 0, alors cela signifie que la requête de contenu est reçue pour la première fois. En effet, le filtre de Bloom général FBS indique que la requête de contenu n'a pas encore été acheminée dans le réseau et donc qu'elle n'a pas encore été traitée. On rappelle qu'en utilisant un filtre de Bloom on sait avec certitude qu'un élément est absent du filtre. Dans ce cas, conformément à l'étape E7 de consultation et de transmission, la requête de contenu est acheminée dans le réseau et le filtre de Bloom général FBS enregistre le nom du contenu n_cont en positionnant à 1 les bits correspondant aux j valeurs d'indices calculées.

Dans un deuxième cas où toutes les valj-ièmes valeurs du filtre de bloom général FBS sont égales à un, c'est-à-dire dans un cas où l'on sait avec une certaine probabilité que la requête de contenu a déjà été acheminée dans le réseau par le dispositif 10 et donc qu'il s'agit a priori d'une deuxième requête relative à un même contenu, la requête de contenu est bloquée et n'est pas acheminée sur la deuxième interface. Dans ce cas, elle n'est bien sûr pas enregistrée dans le filtre PB1 qui met en oeuvre la table des demandes pendantes PIT1 associée à la première interface int₁.

Ainsi, lorsque le filtre de Bloom avec compteurs FB1 correspondant à la table des demandes pendantes PIT1 associée à la première interface int₁ et le filtre de Bloom général FBS indiquent tous les deux que le nom du contenu requis est présent, alors cela signifie que la requête concernée est une requête dupliquée. Dans le cas contraire, il s'agit d'un faux-positif.

Lorsqu'un contenu arrive sur une interface intᵢ du dispositif 10, conformément aux étapes du procédé décrites en relation avec la figure 3b, une recherche dans la table des contenus ToC est réalisée, conformément à l'étape E11 de recherche de manière à vérifier si le contenu n_cont y est déjà mémorisé. Si c'est le cas, alors le paquet de données dp_cont est effacé. En effet, il s'agit dans ce cas d'un contenu dupliqué. Dans le cas où le contenu n'est pas déjà mémorisé dans la table des contenus ToC, alors conformément à l'étape E12 d'ajout, le contenu est mémorisé dans la table des contenus ToC. Il est ensuite vérifié si le nom de contenu n_cont figure dans au moins une table des demandes pendantes, conformément à l'étape E13 d'interrogation des tables des demandes pendantes PITi. A cette fin, le dispositif 10 interroge chacun des filtres de Bloom avec compteurs FBi, associé respectivement à chacune des interfaces intᵢ, à partir du nom du contenu n_cont. L'empreinte du nom du contenu n_cont est donc calculé au moyen des k fonctions de hachage h₁, ..., hₖ, et il est vérifié si les k valj-ièmes compteurs du filtre FBi sont supérieurs ou égaux à 1, c'est-à-dire si FBi[valj] ≥ 1. Si c'est le cas, conformément à l'étape E14 de suppression, l'empreinte du nom du contenu n_cont est supprimée du filtre de Bloom FBi. A cette fin, les k valj-ièmes compteurs du filtre FBi sont décrémentés de un. Le paquet de données dp_cont est alors envoyé sur l'interface intᵢ, conformément à l'étape E15 d'envoi.

## Revendications

1. Procédé de traitement d'une requête de contenu par un dispositif d'acheminement (10) dans un réseau de communication mettant en oeuvre un acheminement par nom, le dispositif comprenant une pluralité d'interfaces (int₁, ..., intₙ) aptes à recevoir au moins un requête de contenu et au moins un paquet de données associé à un contenu, et une table d'acheminement (FIB) adaptée pour déterminer en fonction d'un nom de contenu requis (n_cont), au moins une interface vers laquelle acheminer la requête de contenu, ledit procédé comprenant :
- une étape de réception (E1) de la requête de contenu à travers une première interface (int₁) du dispositif,
- si le dispositif n'est pas apte à fournir ledit paquet de données associé au contenu, une étape (E5) de recherche du nom du contenu dans une table des demandes pendantes (PIT1) associée à la première interface, par l'intermédiaire de laquelle la requête a été reçue,
- dans le cas où le nom de contenu ne figure pas dans la table des demandes pendantes associée à la première interface, une étape (E6) de mémorisation du nom du contenu requis dans ladite table, et
- une étape de transmission (E7) de la requête à travers au moins une deuxième interface (int₂), ladite deuxième interface étant déterminée en fonction du nom du contenu requis à partir de la table d'acheminement dudit dispositif.

2. Procédé de traitement d'une requête de contenu selon la revendication 1, comprenant :
- une étape (E10) de réception du paquet de données associé au contenu par la deuxième interface, le paquet de données comprenant le nom du contenu,
- une étape (E13) d'interrogation des tables des demandes pendantes associées respectivement aux interfaces, à partir du nom du contenu, afin de déterminer au moins une interface concernée, dont la table des demandes pendantes associée comprend le nom du contenu,
- une étape (E15) d'envoi du paquet de données à travers l'interface concernée.

3. Procédé selon la revendication 1, comprenant :
- une étape (E100) de réception d'une commande de remise à zéro des tables des demandes pendantes associées respectivement aux interfaces, en provenance d'une entité de supervision de la qualité de service,
- une étape (E101) de remise à zéro des tables des demandes pendantes du dispositif.

4. Procédé selon la revendication 1, comprenant après réception de la requête de contenu, une étape de formatage (E2) du nom du contenu.

5. Procédé selon la revendication 1, dans lequel la table des demandes pendantes est mise en oeuvre au moyen d'un filtre de Bloom avec compteurs, le filtre étant une table de m compteurs, l'étape de mémorisation du nom du contenu comprenant :
- une application d'un nombre déterminé de fonctions de hachage h1, ..., hk, au nom du contenu, les fonctions appliquées produisant respectivement une valeur comprise entre 0 et m-1,
- un incrément de un des compteurs du filtre associés à des indices du filtre, lesdits indices étant égaux aux valeurs respectives produites par les fonctions de hachage.

6. Procédé selon la revendication 5, dans lequel le dispositif d'acheminement comprend en outre un filtre de Bloom global, le procédé comprenant :
- sur réception de la requête de contenu, une étape de vérification que le nom du contenu est présent dans le filtre de Bloom avec compteurs qui met en oeuvre la table des demandes pendantes associée à la première interface,
- si le nom du contenu est présent dans le filtre de Bloom avec compteurs associé à la première interface, une étape de vérification que le nom du contenu figure dans le filtre de Bloom global,
- si le nom du contenu figure dans le filtre de Bloom global, une étape de blocage de ladite requête de contenu.

7. Dispositif d'acheminement (10) dans un réseau de communication (20) mettant en oeuvre un acheminement par nom, ledit dispositif comprenant :
- une pluralité d'interfaces (int₁, ..., intₙ), respectivement adaptées pour recevoir au moins une requête de contenu et au moins un paquet de données associé à un contenu,
- une table d'acheminement (FIB), adaptée pour déterminer en fonction d'un nom de contenu requis (n_cont), au moins une interface vers laquelle acheminer la requête de contenu,
- une pluralité de tables de demandes pendantes, chaque table des demandes pendantes étant associée à une interface respective et agencée pour mémoriser le nom d'un contenu requis via l'interface à laquelle elle est associée,
- des moyens de transmission, agencés pour transmettre la requête de contenu reçue sur une première interface vers une deuxième interface, ladite deuxième interface étant identifiée en fonction du nom du contenu dans la table d'acheminement dudit dispositif.

8. Réseau apte à mettre en oeuvre un acheminement par nom de contenu, comprenant :
- au moins une entité cliente, adaptée pour émettre des requêtes de contenus, et
- une pluralité de dispositifs d'acheminement selon la revendication 7.

9. Programme destiné à être installé dans un dispositif d'acheminement d'un réseau de communication mettant en oeuvre un acheminement par nom, comprenant des instructions pour la mise en oeuvre des étapes du procédé de traitement d'une requête de contenu selon l'une des revendications 1 à 6, qui sont exécutées par le dispositif, lorsque le programme est exécuté par un processeur.

10. Support de données sur lequel est enregistré le programme d'ordinateur selon la revendication 9.

## Patentansprüche

1. Verfahren zur Bearbeitung einer Inhaltsanforderung durch eine Weiterleitungsvorrichtung (10) in einem Kommunikationsnetz, das eine Weiterleitung nach dem Namen einsetzt, wobei die Vorrichtung eine Vielzahl von Schnittstellen (int₁ ..., intₙ) umfasst, die geeignet sind, mindestens eine Inhaltsanforderung und mindestens ein einem Inhalt zugeordnetes Datenpaket zu empfangen, und eine Weiterleitungstabelle (FIB) umfasst, die dazu vorgesehen ist, in Abhängigkeit von einem Namen eines angeforderten Inhalts (n_cont) mindestens eine Schnittstelle zu bestimmen, zu der die Inhaltsanforderung weitergeleitet werden soll, wobei das Verfahren umfasst:
- einen Schritt des Empfangens (E1) der Inhaltsanforderung über eine erste Schnittstelle (int₁) der Vorrichtung,
- wenn die Vorrichtung nicht geeignet ist, das dem Inhalt zugeordnete Datenpaket zu liefern, einen Schritt (E5) des Suchens des Namens des Inhalts in einer Tabelle von anhängigen Anforderungen (PIT1), die der ersten Schnittstelle, über die die Anforderung empfangen wurde, zugeordnet ist,
- falls der Name des Inhalts nicht in der Tabelle der anhängigen Anforderungen, die der ersten Schnittstelle zugeordnet ist, vorhanden ist, einen Schritt (E6) des Speicherns des Namens des angeforderten Inhalts in der Tabelle, und
- einen Schritt (E7) des Übertragens der Anforderung über mindestens eine zweite Schnittstelle (int₂), wobei die zweite Schnittstelle in Abhängigkeit vom Namen des angeforderten Inhalts aus der Weiterleitungstabelle der Vorrichtung bestimmt wird.

2. Verfahren zur Bearbeitung einer Inhaltsanforderung nach Anspruch 1, umfassend:
- einen Schritt (E10) des Empfangens des Datenpakets, das dem Inhalt zugeordnet ist, durch die zweite Schnittstelle, wobei das Datenpaket den Namen des Inhalts umfasst,
- einen Schritt (E13) des Abfragens der Tabellen der anhängigen Anforderungen, die jeweils den Schnittstellen zugeordnet sind, auf Basis des Namens des Inhalts, um mindestens eine betreffende Schnittstelle zu bestimmen, deren zugeordnete Tabelle der anhängigen Anforderungen den Namen des Inhalts umfasst,
- einen Schritt (E15) des Sendens des Datenpakets durch die betreffende Schnittstelle.

3. Verfahren nach Anspruch 1, umfassend:
- einen Schritt (E100) des Empfangens eines Rücksetzungsbefehls der Tabellen der anhängigen Anforderungen, die jeweils den Schnittstellen zugeordnet sind, von einer Supervisionseinheit der Dienstleistungsqualität,
- einen Schritt (E101) der Rücksetzung der Tabellen der anhängigen Anforderungen der Vorrichtung.

4. Verfahren nach Anspruch 1, umfassend nach dem Empfangen der Inhaltsanforderung einen Schritt (E2) der Formatierung des Namens des Inhalts.

5. Verfahren nach Anspruch 1, bei dem die Tabelle der anhängigen Anforderungen mit Hilfe eines Bloom-Filters mit Zählern eingesetzt wird, wobei der Filter eine Tabelle von m Zählern ist, wobei der Schritt des Speicherns des Namens des Inhalts umfasst:
- ein Anlegen einer bestimmten Anzahl von Hash-Funktionen h1, ..., hk, an den Namen des Inhalts, wobei die angelegten Funktionen jeweils einen Wert zwischen 0 und m-1 produzieren,
- ein Inkrement mit Betrag 1 der Zähler des Filters, die Indizien des Filters zugeordnet sind, wobei die Indizien gleich den jeweiligen von den Hash-Funktionen produzierten Werten sind.

6. Verfahren nach Anspruch 5, bei dem die Weiterleitungsvorrichtung ferner einen globalen Bloom-Filter aufweist, umfassend:
- bei Empfang der Inhaltsanforderung einen Schritt der Überprüfung, ob der Name des Inhalts in dem Bloom-Filter mit Zählern vorhanden ist, der die Tabelle der anhängigen Anforderungen, die der ersten Schnittstelle zugeordnet ist, einsetzt,
- wenn der Name des Inhalts in dem Bloom-Filter mit Zählern, der der ersten Schnittstelle zugeordnet ist, vorhanden ist, einen Schritt der Überprüfung, ob der Name des Inhalts in dem globalen Bloom-Filter vorhanden ist,
- wenn der Name des Inhalts in dem globalen Bloom-Filter vorhanden ist, einen Schritt des Blockierens der Inhaltsanforderung.

7. Weiterleitungsvorrichtung (10) in einem Kommunikationsnetz (20), die eine Weiterleitung nach dem Namen einsetzt, wobei die Vorrichtung umfasst:
- eine Vielzahl von Schnittstellen (int₁ ..., intₙ), die jeweils geeignet sind, mindestens eine Inhaltsanforderung und mindestens ein einem Inhalt zugeordnetes Datenpaket zu empfangen,
- eine Weiterleitungstabelle (FIB), die dazu vorgesehen ist, in Abhängigkeit von einem Namen eines angeforderten Inhalts (n_cont) mindestens eine Schnittstelle zu bestimmen, zu der die Inhaltsanforderung weitergeleitet werden soll,
- eine Vielzahl von Tabellen von anhängigen Anforderungen, wobei jede Tabelle von anhängigen Anforderungen einer jeweiligen Schnittstelle zugeordnet und dazu vorgesehen ist, den Namen eines Inhalts zu speichern, der über die Schnittstelle, der sie zugeordnet ist, angefordert wird,
- Übertragungsmittel, die dazu vorgesehen sind, die auf einer ersten Schnittstelle empfangene Inhaltsanforderung zu einer zweiten Schnittstelle zu übertragen, wobei die zweite Schnittstelle in Abhängigkeit vom Namen des Inhalts in der Weiterleitungstabelle der Vorrichtung identifiziert wird.

8. Netz, das geeignet ist, eine Weiterleitung eines Inhalts nach dem Namen einzusetzen, umfassend:
- mindestens eine Kundeneinheit, die geeignet ist, Inhaltsanforderungen zu entsenden, und
- eine Vielzahl von Weiterleitungsvorrichtungen nach Anspruch 7.

9. Programm, das dazu bestimmt ist, in einer Weiterleitungsvorrichtung eines Kommunikationsnetzes installiert zu werden, das eine Weiterleitung nach dem Namen einsetzt, umfassend Befehle für den Einsatz der Schritte des Verfahrens zur Bearbeitung einer Inhaltsanforderung nach einem der Ansprüche 1 bis 6, die von der Vorrichtung ausgeführt werden, wenn das Programm von einem Prozessor ausgeführt wird.

10. Datenträger, auf dem das Computerprogramm nach Anspruch 9 aufgezeichnet ist.

## Claims

1. Method for processing a content request by a forwarding device (10) in a communication network implementing name forwarding, the device comprising a plurality of interfaces (int₁, ..., intₙ) capable of receiving at least one content request and at least one data packet associated with a content, and a forwarding information base (FIB) adapted to determine, as a function of a requested content name (n_cont), at least one interface to which to forward the content request, said method comprising:
- a step (E1) of receiving the content request through a first interface (int₁) of the device,
- if the device is not capable of providing said data packet associated with the content, a step (E5) of searching for the name of the content in a pending interest table (PIT1) associated with the first interface, via which the request was received,
- in the event that the content name does not appear in the pending interest table associated with the first interface, a step (E6) of storing the name of the requested content in said table, and
- a step (E7) of sending the request through at least one second interface (int₂), said second interface being determined as a function of the name of the requested content on the basis of the forwarding information base of said device.

2. Method for processing a content request according to Claim 1, comprising:
- a step (E10) of receiving the data packet associated with the content via the second interface, the data packet comprising the name of the content,
- a step (E13) of interrogating pending interest tables associated respectively with the interfaces, on the basis of the name of the content, in order to determine at least one relevant interface, the associated pending interest table of which comprises the name of the content,
- a step (E15) of sending the data packet through the relevant interface.

3. Method according to Claim 1, comprising:
- a step (E100) of receiving a command to reset the pending interest tables associated respectively with the interfaces, coming from a quality of service supervision entity,
- a step (E101) of resetting the pending interest tables of the device.

4. Method according to Claim 1, comprising a step (E2) of formatting the name of the content after reception of the content request.

5. Method according to Claim 1, wherein the pending interest table is implemented by means of a counting Bloom filter, the filter being a table of m counters, the step of storing the name of the content comprising:
- application of a determined number of hash functions h1, ..., hk to the name of the content, the applied functions respectively producing a number lying between 0 and m-1,
- an increment by a step of value 1 of the counters of the filter which are associated with indices of the filter, said indices being equal to the respective values produced by the hash functions.

6. Method according to Claim 5, wherein the forwarding device furthermore comprises a global Bloom filter, the method comprising:
- on reception of the content request, a step of checking whether the name of the content is present in the counting Bloom filter which implements the pending interest table associated with the first interface,
- if the name of the content is present in the counting Bloom filter associated with the first interface, a step of checking whether the name of the content appears in the global Bloom filter,
- if the name of the content appears in the global Bloom filter, a step of blocking said content request.

7. Forwarding device (10) in a communication network (20) implementing name forwarding, said device comprising:
- a plurality of interfaces (int₁, ..., intₙ) respectively adapted to receive at least one content request and at least one data packet associated with a content,
- a forwarding information base (FIB) adapted to determine, as a function of a requested content name (n_cont), at least one interface to which to forward the content request,
- a plurality of pending interest tables, each pending interest table being associated with a respective interface and arranged in order to store the name of a content requested by the interface with which it is associated,
- transmission means arranged in order to send the content request received on a first interface to a second interface, said second interface being identified as a function of the name of the content in the forwarding information base of said device.

8. Network capable of implementing named content forwarding, comprising:
- at least one client entity adapted to send content requests, and
- a plurality of forwarding devices according to Claim 7.

9. Program intended to be installed in a forwarding device of a communication network implementing name forwarding, comprising instructions for carrying out the steps of the method for processing a content request according to one of Claims 1 to 6, which are executed by the device when the program is run by a processor.

10. Data medium on which the computer program according to Claim 9 is stored.
